# EUROPEAN PATENT SPECIFICATION

(11) **EP 3 972 908 B1**
(45) Date of publication and mention of the grant of the patent: **22.01.2025**
(21) Application number: 20742861.6
(22) Date of filing: 20.05.2020
(51) Int. Cl.: B65B 29/02, B65D 85/804

(54) **A PROCESS FOR MAKING AN INFUSION PRODUCT AND PACKAGE CONTAINING AN INFUSION MATERIAL**
VERFAHREN ZUR HERSTELLUNG EINES INFUSIONSPRODUKTS UND VERPACKUNG MIT EINEM INFUSIONSMATERIAL
PROCÉDÉ DE FABRICATION D'UN PRODUIT D'INFUSION ET EMBALLAGE CONTENANT UNE SUBSTANCE D'INFUSION

(30) Priority: 21.05.2019 IT 201900007066
(43) Date of publication of application: 30.03.2022
(73) Proprietor: Commerciale Adriatica S.r.l., 48026 Russi (RA) (IT); Belloli, Gianpaolo, 40135 Bologna (IT)
(72) Inventor: BELLOLI, Gianpaolo, 40135 Bologna (IT)
(74) Representative: Fanzini, Valeriano
(86) International application number: PCT/IB2020/054776
(87) International publication number: WO 2020/234793

(56) References cited:
- WO-A1-2012/080908
- WO-A1-2017/017515
- WO-A1-2018/164667
- WO-A1-2019/141872
- DE-A1- 102014 000 187

## Description

### Field of application of the present invention

The present invention refers to a process for making an edible product.

Said edible product is in the form of an infusion product to obtain a respective beverage.

In particular, said edible product comprises a respective material in the form of powder, granules, or pieces, such as coffee, tea, chamomile, herbal tea, milk, chocolate, medicinal herbs, or other.

The background of the invention refers to a package containing an edible material, said edible material being in the form of an infusion product.

### State of the art

From U.S. patent application US2017341789 a process is known, in which a predefined portion of infusion material, preferably coffee, is provided, said predefined portion of said material is inserted in a respective casing, made of biodegradable and/or of organic origin film, i.e., of the compostable type, said casing is completely closed with the inserted material, said casing and material are arranged in a respective mould, and subsequently energy, in particular ultrasound energy, is provided to said closed casing with the contained material, until intimately connecting, or adhering, said casing to said material on the entire peripheral surface of the material.

However, this way of operating, is somewhat demanding when it comes to embodiment. In fact, a bag defining the outer casing of the product must first be filled, closed, then transported to the compaction zone, all with an excessive number of operations and therefore a considerable complication of the machines that have to implement such a process.

According to other already known packages, the infusion material, for example, tea, herbal teas, or other, is simply introduced into a corresponding sachet of biodegradable material or of biological origin, and the respective package is placed in infusion into a corresponding cup of hot water.

Said sachets of tea or other, made of biodegradable material, after being used, can be thrown into the biological waste disposal container, without any concern regarding the biodegradability of the same package.

However, this kind of packages has a limited use for a traditional use. The compactness of these packages is not such that they are able to be used inside respective infusion machines, in which the material has to be inserted stationary into a respective seat of the machine where the infusion process takes place. In practice, the use of these packages is limited to uses that require a direct immersion of the sachet into the cup containing the hot water.

Pods for infusion material, in particular coffee, are also known, which have a rigid texture that allows their use in corresponding infusion machines and in which the package is defined by an outer casing made of aluminum film, which compresses and strongly retains the material housed therein. In these packages of coffee, the outer casing is therefore made of a non-biodegradable material, and thus, even if it contains a product which is perfectly compostable, the package as a whole cannot be disposed of in the biological waste disposal container.

Therefore, the need is currently felt to have pods or packaged products that can be easily disposed of in the biological waste disposal container and which at the same time can be easily used for example in respective infusion machines and which in any case are easily obtainable on an industrial scale.

Packages containing an edible material, in the form of an infusion product, especially in the form of coffee, are known, which are used in corresponding machines for the infusion of said edible material in hot water, to implement a corresponding beverage, and which are provided with respective members, in particular in the form of needles, for perforating the package and which are adapted to achieve the inflow of said fluid into the package and to allow the outflow from the same package of the same fluid with the infused edible material.

These already-known packages are made of aluminium film, i.e., of a film of the barrier type, which contains said coffee in a tablet shape, or wrapped edible product, and are easily used by the users, and which however cannot therefore be disposed of in the biodegradable or compostable waste containers.

Other known packages, however, are in the form of filter paper pods, which however require the use of an external package made of a so-called barrier material to be separated from the respective pod before using the same in the corresponding machine, and which are however of uncomfortable use for the users, and which still have similar disposal problems.

In the field, the need is therefore felt to have a package that is easily usable by the users.

In the field, the need is further felt, to have a package that allows to protect the natural environment as much as possible.

In the field, however, the need is felt to have a suitable package to allow an optimal passage for the withdrawal of the edible material by the infusion liquid.

In the field, the need is also felt to have a package that can be obtained easily and quickly and without generating an excessive level of fouling in the equipment intended for the embodiment thereof.

In the field, the need is also felt to have a package that can be easily taken and treated by corresponding infusion machines.

In the field, the need is further felt to obtain a considerable saving of material to create the package outer shell.

WO2017/017515 discloses an apparatus for making a product, preferably a food product for making a drink by infusion in a respective liquid, preferably in water, especially in hot water; the product being obtained from a raw material comprising or formed by respective particles, in particular powder, granules, pieces or the like, for example of roasted and ground coffee comprising supporting means for means for making respective products starting from a respective predetermined or measured portion of raw material, which making means comprise means for aggregating particles of the predetermined portion of raw material.

### Summary of the invention

With the present invention a new and alternative solution to the solutions known so far is meant to be proposed, and in particular the aim is to obviate one or more of the drawbacks or problems referred to above and/or to satisfy one or more needs referred to above, and/or in any case felt in the art, and in particular being evident from what has been referred to the above.

Therefore, a process for making an edible product in accordance with claim 1 is provided.

In this manner, it is possible to create in a simplified and easy way an entirely compostable edible product and in which the external film effectively contains the material internally housed and that it can be so advantageously used, even directly, in corresponding infusion machines.

### Brief description of the drawings

This and other innovative aspects, or respective advantageous embodiments, are, however, set forth in the attached claims, the specific technical features of which can be found, together with corresponding advantages achieved, in the following description, illustrating in detail a purely exemplary and non-limiting embodiment of the invention, and which is given with reference to the attached drawings, in which:
- Fig. 1A illustrates a schematic view of a preferred embodiment of edible product in a wrapped condition according to the present invention, which does not form part of the claims;
- Fig. 1B illustrates a schematic view of a preferred embodiment of edible product in a non-wrapped condition, which does not form part of the claims;
- Fig. 2 illustrates a schematic view of the preferred embodiment of process according to the present invention;
- Fig. 3A illustrates a schematic perspective view of a first preferred embodiment of package, which does not form part of the attached claims;
- Fig. 3B illustrates a schematic exploded, perspective view of the first preferred embodiment of package, which does not form part of the attached claims;
- Fig. 4A illustrates a schematic, elevational side view of a second preferred embodiment of package, which does not form part of the attached claims;
- Fig. 4B illustrates a schematic bottom plan view of the upper valve of the outer shell for housing the tablet, or wrapped edible product, of the second preferred embodiment of package, which does not form part of the attached claims;
- Fig. 4C illustrates a schematic plan view from above of the lower valve of the outer shell for housing the tablet, or wrapped edible product, of the second preferred embodiment of package, which does not form part of the attached claims;
- Fig. 4D illustrates a schematic plan view from above of the upper valve of the outer shell for housing the tablet, or wrapped edible product, of the second preferred embodiment of package, in a perforated condition due to the insertion of the infusion fluid into the same outer shell, which does not form part of the attached claims;
- Fig. 4E illustrates a schematic bottom plan view of the lower valve of the outer shell for housing the tablet, or wrapped edible product, of the second preferred embodiment of package, in a perforated condition due to the exit del infusion fluid with the same edible material from said outer shell, which does not form part of the attached claims;
- Fig. 5 illustrates a schematic plan view from above of a first embodiment form of a sheet for producing corresponding valves of the present package, which does not form part of the attached claims;
- Fig. 6 illustrates a schematic plan view from above of a second embodiment form of a sheet for producing corresponding valves of the present package, which does not form part of the attached claims;
- Fig. 7A illustrates a schematic perspective view of a third preferred embodiment of package, which does not form part of the attached claims;
- Fig. 7B illustrates a schematic exploded, perspective view of the third preferred embodiment of package, which does not form part of the attached claims;
- Fig. 8 illustrates a schematic view in longitudinal section of a preferred embodiment of adapter for infusion machines, in particular using the third embodiment form of package, which does not form part of the attached claims.

### Detailed description of preferred embodiments of the invention

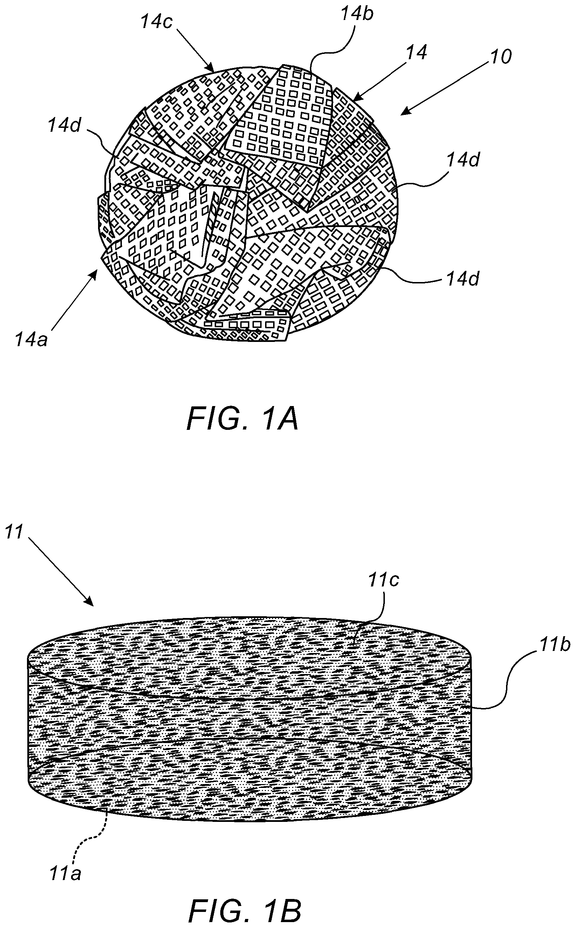

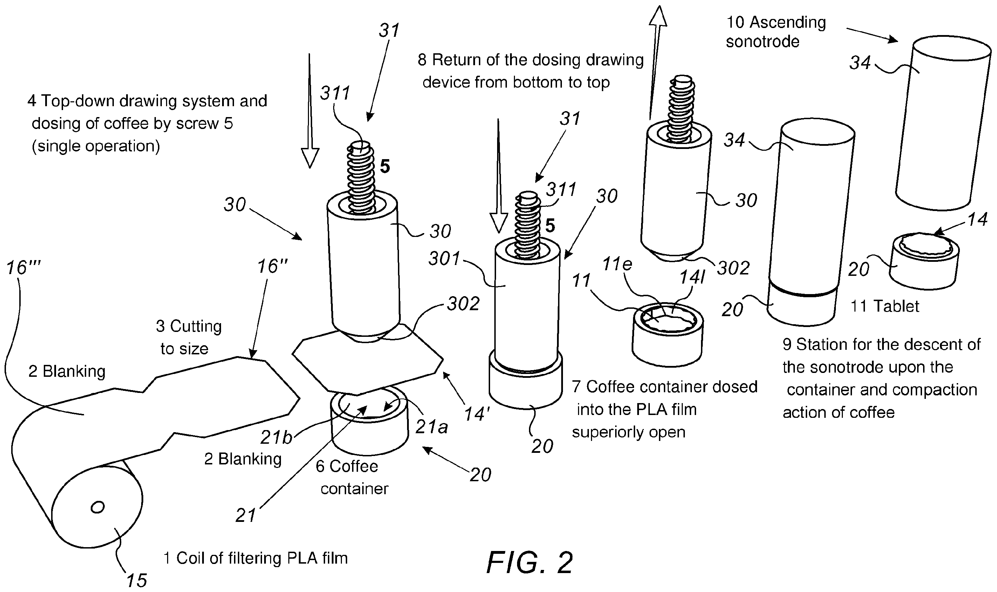

In the attached Fig. 2, a preferred embodiment of a process for making an edible product, illustrated in Fig. 1A, is shown.

Said edible product is in the form of an infusion product to obtain a respective beverage, and in particular comprises a material 11, which is in the form of a material in the form of powder, granules or pieces, such as coffee, tea, chamomile, herbal tea, milk, chocolate, medicinal herbs, or other, as can be seen from Fig. 1B.

Advantageously, according to the process, as is clear from said Fig. 2, the process provides for arranging a casing 14, made of biodegradable and/or of organic origin film, i.e., of the compostable type, according to an open, in particular a cup-shaped, configuration, in that it provides for a predefined portion 11 of said material within said open casing 14, and, therefore, to provide energy to said casing 14 with the contained material 11, preferably until intimately connecting, or adhering, said casing 14 to said material 11 on the entire, or substantially entire peripheral surface of the material, especially including the lower surface 11a, the side surface 11b, and the entire, or substantially entire, upper surface 11c of said material.

In this manner, it is possible to create in a simplified and particularly easy manner an edible product 10, which is entirely compostable, and in which the outer film effectively contains the material housed internally. The present edible product 10 can be advantageously used, even directly in corresponding infusion machines, for example inserted into the corresponding housing seat of said machine, where the same edible product 10 is subjected to infusion, by a corresponding fluid or liquid, to create a respective beverage.

With advantage, as can be seen in particular from said Fig. 2, said casing is obtained from a respective small sheet 14' that is introduced in a respective mould 20 having a chamber 21 for housing the product and the respective casing or small sheet 14', in a folded condition, which chamber 21 is defined by a bottom surface 21a and by a side surface 21b.

Said mould 21 is open on the side opposite the bottom side 21a, having an upper opening 21c which is defined by the outermost edge of said side, preferably cylindrical, surface 21b defining said housing chamber 21, so that said folded casing or small sheet 14' has a bottom wall -which is not illustrated in particular in the attached figures-, and a side wall 14l, and with said predefined portion of edible, or infusion, material 11 that is introduced in said folded casing or small sheet 14' housed within said mould.

Advantageously, as is clear from said Fig. 2, said folded small sheet or casing within said housing chamber 21 of the mould 20 has the respective side wall 14l with respective, in particular upper, ends, which remain completely within the same chamber 21 of the mould 20, i.e., below the outermost edge of said side surface 21b defining said housing chamber 21, which side wall 14l is arranged parallel, or substantially parallel, to the corresponding side wall 21b of the housing chamber 21 of the mould 20.

In this manner, it is avoided to hamper the subsequent compaction operation of the edible product in a loose condition, and the adhesion of the casing thereto, which operation is implemented by the sonotrode device, as it will be better understood from the following in the present description.

In an advantageous manner, as is clear from said Fig. 2, said predetermined portion of edible, or infusion, material is introduced into said housing chamber 21 of the mould 20 and into the small sheet or casing, in a folded condition, with said side wall 14l of the small sheet or casing projecting superiorly beyond the upper surface 11c of the same edible, or infusion, material.

In this manner, however, as it will be clearer from the following in the present description, it is possible to use a single small sheet 14' of special film to wrap the edible, or infusion, material.

With advantage, as is clear from said Fig. 2, said casing 14 is obtained from a respective planar small sheet 14', made of a welding or non-welding, i.e., filtering or non-filtering, material, which is suitably shaped to make so that the entire side wall 14l of the casing or small sheet 14' folded in an open configuration, in particular in the form of a cup, remains completely within the same chamber 21 of the mould 20 of the same mould.

In particular, as can be seen in particular from said Fig. 2, in this preferred embodiment, said small sheet 14' is in a quadrangular shape with corresponding rounded edges 14".

However, it would also be conceivable to make said small sheet in a polygonal shape, or profile, i.e., in a circular shape, or profile.

In this manner, with a few and easy operations, a casing suitable for the purpose is obtained.

In a particularly advantageous manner, as is clear from said Fig. 1A, said casing 14, in a condition that is wrapped on the portion 11 of edible, or infusion, material, has a bottom wall 14a, in particular in contact with and adhering to the lower surface of said material, a side wall 14b in contact with the side surface of the same material, and an upper wall 14c, in particular in contact, or substantially in contact, with the entire upper surface of the product, especially, which upper wall is defined by a corresponding plurality of portions or flaps 14d of the casing that are in a folded, or crumpled, condition, on the upper surface 11c of said portion 11 of edible, or infusion, material, and preferably in an at least partially overlapping condition one upon the other.

Said portions or flaps 14d are defined by the portion of said side wall 14l of the small sheet in a folded condition inside the mould, which projects with respect to the upper face 11c of the material or predefined portion 11.

In this manner, with a few, easy operations, a casing is obtained, which completely wraps the product or edible, or infusion, material.

Advantageously, as is clear from said Fig. 2, in order to introduce the small sheet into the housing chamber 21 of the mould 20, corresponding drawing means 30 are used, in particular which drawing means 30 are mobile between a lifted position for the positioning of the small sheet 14' superiorly to the opening 21c for the introduction into said housing chamber 21 of the mould 20, and a lowered position for the insertion of said small sheet, in a folded condition 14', into the same housing chamber 21 of the mould 20.

With advantage, as is clear from said Fig. 2, drawing means 30 are used, which are defined by a preferably cylindrical body 301, which has a shaped, in particular conical, end, 302 for the engagement and insertion of the small sheet into the housing chamber 21 of the same mould 20.

In an advantageous manner, as is clear from said Fig. 2, said drawing means 30 are also adapted to define dosing means of said predetermined portion 11 of product into said casing or small sheet 14' housed in the housing chamber 21 of the mould 20.

In this manner, a particularly rapid process is obtained and that is such as to require, for its embodiment, the use of a limited space.

Advantageously, as is clear from said Fig. 2, the drawing body 301 is internally hollow, and it houses means 31 for dosing the predefined portion of product, in particular in the form of a respective screw 311 to feed the edible, or infusion, material, towards a respective outlet mouth, however not particularly evident in the attached figures, at the engaging end of the small sheet of said drawing body 301, i.e., of the shaped, or conical, outermost portion, of the same drawing body 20.

With advantage, according to the process, the predetermined portion of product 11 is dosed, while said drawing and/or dosing means 30 are in the lowered position for the insertion of said small sheet 14', arranging it in a folded condition, into the same housing chamber 21 of the mould 20.

In a particularly advantageous manner, as is clear from said Fig. 2, the small sheet 14' for the definition of the casing 14 is cut, through corresponding cutting means, not particularly illustrated in the attached figures, by a corresponding web of material 14"', in particular unrolled from a corresponding coil 15.

With advantage, as can be seen from Fig. 2, said predefined portion 11 of said material is provided directly into the folded casing, in an open configuration, into the housing chamber 21 of the mould 21.

In an advantageous manner, as is clear in particular from Fig. 2, energy is supplied to said casing 14', with the contained material 11, within said forming mould 20.

Advantageously, therefore, as is clear from said Fig. 2, by means of said energy supply to said casing 14, with the contained material 11, a rigid and compact tablet of said material 11 is obtained.

With advantage, the energy that is supplied to said casing 14 with the contained material 11 is in the form of vibrational energy, in particular ultrasound energy, imparted through a corresponding sonotrode 34, engaging the mould 20 for housing the casing and material.

In an advantageous manner, as is clear from said Fig. 2, the energy that is supplied to said casing 14, with the contained material 11, is such as not to destroy or damage the same casing 14.

In a particularly advantageous manner, mechanical vibrational energy at a frequency ranging between 16000 and 35000 Hertz is provided to the casing 14 with the contained material 11.

With advantage, energy in an amount ranging between 500 and 6000 Joules, preferably in a range between 1100 and 3000 Joules is provided to the casing, with the contained material.

With advantage, energy over a time interval ranging between 0.5 and 20 seconds, and preferably ranging between 2 and 6 seconds is provided to the casing with the contained material.

In a particularly advantageous manner, said product is in the form of small pieces of small tea leaves and/or chamomile flower and/or herbal tea and/or medicinal herbs, or which is in the form of powder or granules of toasted, or ground, coffee, or other.

With advantage, said casing, small sheet, 14' is preferably made of PLA, i.e., polylactic acid.

Preferably, according to the process, a filtering or non-filtering, welding or no-nwelding, film is used, preferably made of PLA, having a weight by square meter ranging between 80 mg and 110 mg.

With advantage, the energy that is supplied to said casing 14 with the contained material 11, in particular in the form of vibrational energy, i.e., of ultrasound energy, is such that it makes the respective side wall 14l of the casing 14 projecting beyond the upper surface, or face, 11c of said material, or predefined portion, 11, to fold and adhere to the upper face 11c of the same portion of infusion material 11.

In this manner, it is avoided to use any further device, for example, corresponding mechanical folding means, to carry out such an operation.

Preferably, the portion of infusion material that is treated and inserted into a specific casing 14 has a weight ranging between 5 g and 25 g.

From said Fig. 1A, a preferred embodiment of wrapped edible product 10 is set forth, said edible product 11 being preferably in the form of an infusion product to obtain a respective beverage, and in particular comprising a material in the form of powder, granules or pieces, such as coffee, tea, chamomile, herbal tea, milk, chocolate, medicinal herbs, or other.

With advantage, as illustrated, the product has a casing 14 that is made of biodegradable and/or of organic origin film, which wraps and is preferably intimately connected, or adhering, to said material defining a bottom wall 14a, in particular in contact with and adhering to the lower surface of said material, a side wall 14b in contact with the side surface of the same material, and an upper wall 14c, in particular in contact, or substantially in contact, with the entire upper surface of the product, especially, which upper wall is defined by a corresponding plurality of portions or flaps 14d of the casing that are in a folded, or crumpled, condition, and adhering on the upper surface 11c of said portion 11 of edible, or infusion, material, and that are preferably in an at least partially overlapping condition one upon the other and mutually adhering to each other.

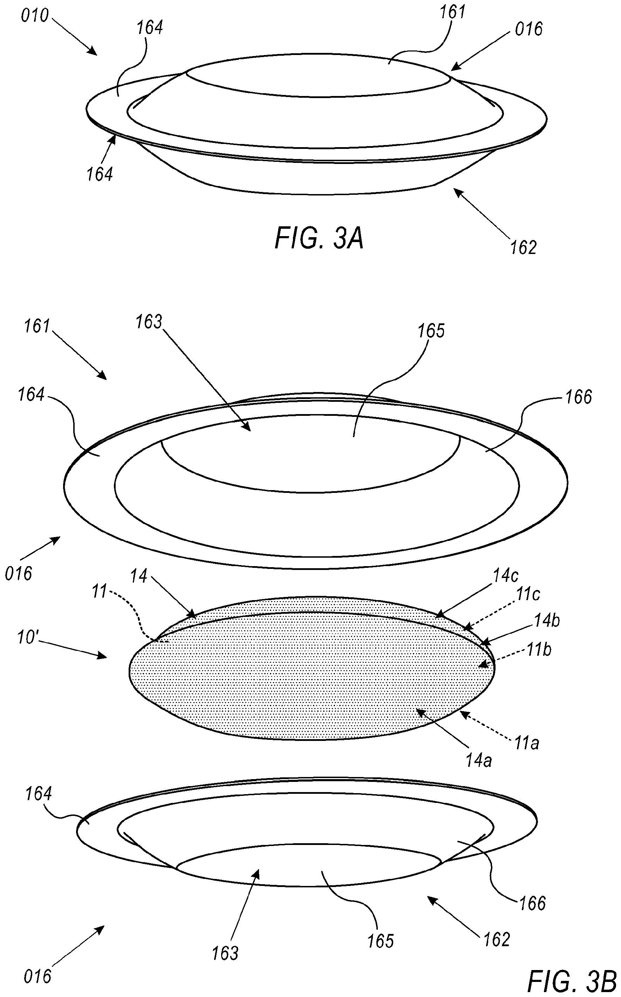

In the attached Figs. 3A to 6, a preferred embodiment 010 of a package containing an edible material is illustrated, said edible material being preferably in the form of an infusion product, especially to obtain a respective beverage, and in particular being in the form of an edible material such as coffee, tea, chamomile, herbal tea, milk, chocolate, infusion herbs, medicinal herbs, or other, and, preferentially, said edible material being in the form of corresponding particles, i.e., being in powder, granules, or pieces of the same edible material. In particular, when the edible material is in the form of coffee, said coffee is a toasted and ground coffee.

The package is advantageously usable, integrally inserted, into a corresponding device, or machine, for the infusion of said edible material into a corresponding infusion fluid, in particular in the form of a liquid, such as water, preferably hot water, especially to make said beverage.

Preferentially said device, or machine, for the infusion of said material having respective members, in particular in the form of needles, for perforating the package and which are adapted to achieve the inflow of said fluid into the package and to allow the outflow from the same package of the same fluid with the infused edible material.

Preferably, as illustrated in particular in Fig. 3, the package comprises a tablet, or wrapped edible product, 10' which is formed by a predefined portion of edible, or infusion, material 11, i.e., by a solid, in particular compact, aggregate of said particles of edible material 11, and by an outer casing, or layer, 14, of a filtering type, i.e., permeable, with respect to the infusion fluid, and especially entirely wrapping the solid aggregate, or predefined portion, of said particles of edible material, as illustrated herein above.

Preferably, said casing 14, as illustrated herein above, is made of a corresponding film of a biodegradable type and/or of biological, in particular plant, origin, 14, i.e., of the compostable type, in particular of polylactic acid or PLA, which preferentially adheres to the outer surface, i.e., to the entire outer surface, 11a, 11b, 11c of said solid aggregate, or predefined portion, of particles of edible material 11, as however, it will be clearer from the following of the present description.

Advantageously, the package further comprises an outer shell 016 for housing said tablet, or wrapped edible product, 10' and made of biodegradable and/or of organic, in particular plant, origin film, i.e., of the compostable type, of the type that is a barrier to the external environment, in particular to oxygen contained in the external environment, for example of Ecolarene^{®}, i.e., a film that is obtained from a laminate of an external high barrier film based on biodegradable compostable cellulose and an internal film based on a biopolymer of biodegradable and compostable vegetable origin.

In this manner, by virtue of the outer shell of the package made of a barrier material and of a biodegradable type and/or of biological, in particular plant, origin, i.e., of the compostable type, it is possible to easily use the entire package directly in the corresponding infusion device and then throw it entirely in the biodegradable or compostable material waste container, all without requiring an external package made of a special barrier material to preserve the contained edible material to be disposed of in the unsorted waste container, as was the case with previously known packages.

In particular, due to the fact that the tablet, or wrapped edible product, comprises the outer casing made of a filtering material, the same tablet, or wrapped edible product, appears to be more compact, and little prone, during the infusion, to split, i.e., to allow the formation in it of corresponding channels of preferential passage of the infusion fluid that would not allow to make a good and homogeneous infusion of the material of the same tablet, or wrapped edible product, thus allowing to obtain an infused product of excellent quality.

With advantage, although not being particularly illustrated in the attached figures, said outer casing, or layer 14 of the tablet, or wrapped edible product, in a particularly preferred manner, can be formed, as reported herein above, by a single small sheet of corresponding biodegradable and/or of biological, in particular plant, origin film, 14, i.e., of the compostable type, which is preferably entirely wrapped about, and in particular adheres to, said solid aggregate, or predefined portion, 11 of said particles of edible material.

Otherwise, a first and a second sheet could be used to make said outer casing, made of corresponding biodegradable and/or of biological, in particular plant, origin film, 14, i.e., of the compostable type, which are adapted to wrap together, and preferably to adhere to, the same solid aggregate, or predefined portion, 11 of said particles of edible material.

As can be seen from said Figs. 3A and 3B, in an advantageous manner, said outer shell 016 for housing said tablet, or wrapped edible product, 10' comprises a first and a second valves 161, 162 mutually facing and connected to one another, and preferably peripherally projecting about said tablet, or wrapped edible product, 10', and, in particular, connected to one another at respective zones that are peripherally projecting and mutually engaging.

In a particularly advantageous manner, as can be seen from said Figs. 3A and 3B, the first and/or the second valves 161, 162 of said outer shell 016 for housing said tablet, or wrapped edible product, 10' comprise a respective cup-shaped portion 163, 163 for housing said tablet, or wrapped edible product, 10'.

In particular, as illustrated, said first and said second valves 161, 162 of said outer shell 016 have respective cup-shaped portions 163, 163 that are mutually facing for a combined housing of said tablet, or wrapped edible product, 10'.

With advantage, as can be seen from said Figs. 3A and 3B, the first and the second valves 161, 162 of said outer shell 016 have the respective portions 163, 163 that are cup-shaped for housing said tablet, or wrapped edible product, 10', which are symmetrically arranged, or configured, about said tablet, or wrapped edible product, 10'.

As can be seen from said Figs. 3A and 3B, advantageously, said first and/or said second valves 161, 162 of said outer shell 16, in particular both of them, have a corresponding at least partially circular outer profile.

In an advantageous manner, as can be seen from said Figs. 3A and 3B, in the first preferred embodiment 010, said first and/or said second valves 161, 162 of said outer shell 16, in particular both of them, have a corresponding entirely circular outer profile.

With advantage, as can be seen from said Figs. 3A and 3B, the respective cup-shaped portion 163, 163 of said first and said second valves 161, 162 of said outer shell have a respective bottom wall 165, in particular planar, or substantially planar, and preferably having a circular profile, from which, in particular peripherally, a respective elevated peripheral wall 166, preferably configured, or shaped, as conical, or substantially conical, extends.

As can be seen from said Figs. 3A and 3B, advantageously, the respective first and/or second valves 161, 162 of said outer shell 016 have a corresponding peripheral lip 164, 164, in particular extending from the respective cup-shaped portion 163, 163 of the respective first or second valve 161, 162 of said outer shell 16, in particular from the corresponding edge of the respective elevated peripheral wall 166 that is opposite the one from which the same elevated peripheral wall 166 extends from the bottom wall 165 of the corresponding cup-shaped portion 163, 163; said outer peripheral lips 164, 164 of said first and second valves 161, 162 of said outer shell 016 mutually facing and integrally engaging to each other.

In a particularly advantageous manner, as can be seen from said Figs. 3A and 3B, the respective peripheral outer lip 164, 164 of said first and/or second valves 161, 162 of said outer shell 016 has an at least partially circular configuration, in particular, as illustrated, said outer peripheral lips 164, 164 are both configured as at least partially circular.

With advantage, as can be seen from said Figs. 3A and 3B, in accordance with the first preferred embodiment, the respective peripheral outer lip 164, 164 of said first and/or second valve 161, 162 of said outer shell 16, in particular both, has a completely circular configuration.

As can be seen from said Figs. 3A and 3B, in an advantageous manner, said solid aggregate, or predefined portion, 11 of said particles of edible material has an upper face 11c, in particular planar-shaped, or substantially planar-shaped, a lower face 11a, in particular planar-shaped, or substantially planar-shaped, and a possible side face 11b, in particular for a connection between said upper face 11c and said lower face 11a, in particular having a general arched configuration, and radially convex outwardly.

Advantageously, as can be seen from said Figs. 3A and 3B, in turn, said outer casing, or layer 14 of the tablet, or wrapped edible product, has a corresponding upper layer 14c, in particular having a respective lower face, in contact with, in particular adhering to, the upper face 11c, in particular planar-shaped, or substantially planar-shaped, of said solid aggregate, or predefined portion, 11 of said particles of edible material.

Advantageously, as can be seen from said Figs. 3A and 3B, said outer casing, or layer 14 of the tablet, or wrapped edible product, further has a corresponding lower layer 14a, in particular having a respective upper face, which is in contact with, in particular which adheres to, the lower face 11a, in particular planar-shaped, or substantially planar-shaped, of said solid aggregate, or predefined portion, 11 of said particles of edible material.

Furthermore, advantageously, as can be seen from said Figs. 3A and 3B, said outer casing, or layer 14 of the tablet, or wrapped edible product, has a possible side layer 14b, in particular having a respective inner face, in contact with, in particular adhering to, the possible side face 11b, especially for a connection between said upper face 11c and said lower face 11a, in particular as illustrated having a general arched configuration, radially convex outwardly.

With advantage, as can be seen form said figures, said outer shell 016 for housing said tablet, or wrapped edible product, 10' is stretched, i.e., is pulled, in contact with the outer surface of said tablet, or wrapped edible product, 10', in particular being stretched, i.e., pulled, in contact with the outer surface 14a, 14b, 14c, of said outer casing, or layer 14 of the tablet, or wrapped edible product, especially being stretched, i.e., pulled, in contact at least with the respective upper face of the upper layer 14c of said outer casing 14 of the tablet, or wrapped edible product, and at least with the lower face of the lower layer 14a of said outer casing 14 of the tablet, or wrapped edible product, and possible also of the outer face of the side layer 14b of the same outer casing 14 of the tablet, or wrapped edible product.

In this manner, a particular compact and suitable package is obtained to allow an optimal withdrawal passage of edible material by the infusion liquid. Furthermore, the present package can be obtained easily and quickly and without generating an excessive level of fouling in the equipment intended for the realization thereof.

As can be seen form said figures, advantageously, said outer shell 016 for housing said tablet, or wrapped edible product, 10' has the respective bottom wall 165 of the corresponding portion cup-shaped 163 of said first valve 161 of said outer shell 016 of the package 010 which is stretched, i.e., pulled, in contact with the upper outer surface of the tablet, or wrapped edible product, 10', i.e., of said upper face of the upper layer 14c of the outer casing 14 of the tablet, or wrapped edible product.

As can be seen form said figures, advantageously, said outer shell 016 for housing said tablet, or wrapped edible product, 10' has the respective bottom wall 165 of the corresponding portion cup-shaped 163 of said second valve 162 of said outer shell 016 for housing said tablet, or wrapped edible product, 10' which is stretched, i.e., pulled, in contact with the lower face of the tablet, or wrapped edible product, 10', i.e., of the lower layer 14a of said outer casing, or layer 14 of the tablet, or wrapped edible product, and possibly the respective elevated peripheral wall 166 of the corresponding portion cup-shaped 163, 163 of said first and/or second valve 161, 162 of said outer shell 16, which is stretched, i.e., pulled, in contact with the side face of said tablet, or wrapped edible product, 10', in particular of the outer face of the side layer 14b of the same outer casing 14 of the tablet, or wrapped edible product.

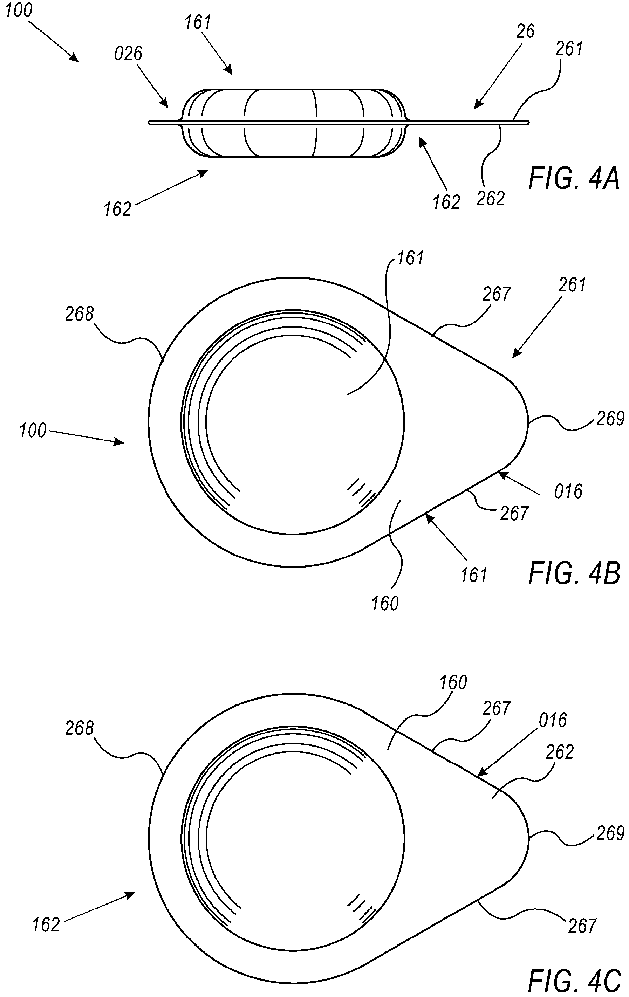

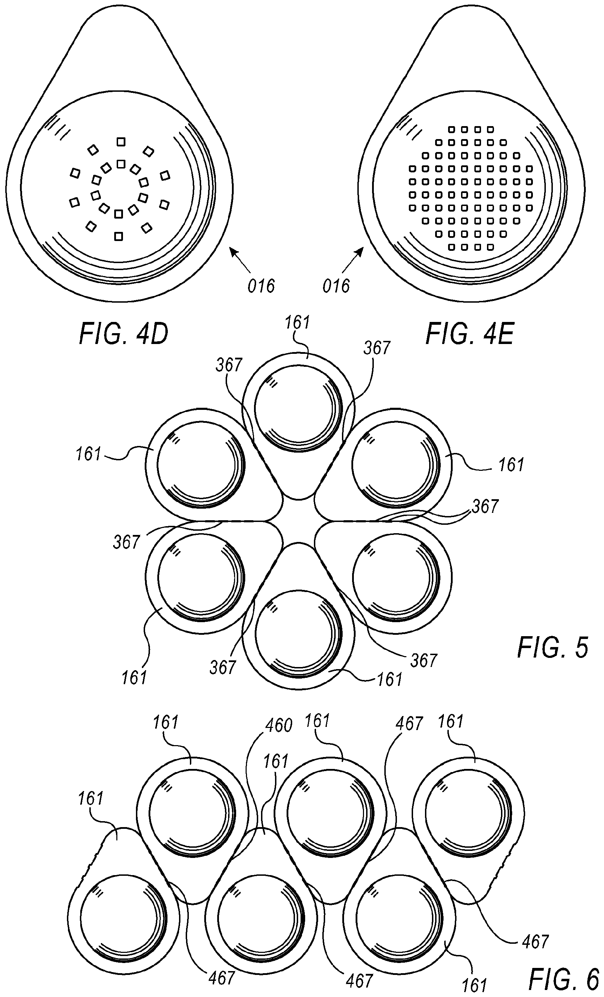

In an advantageous manner, as can be seen from said Figs. 4A to 4E, in accordance with a second preferred embodiment 100 of the present package, the components of which that are similar or equivalent to those of the first preferred embodiment are marked with the same numerical references that were used in the previous preferred embodiment and, in order not to excessively encumber the present description, are not commented in detail again; the package 100 has a respective protruding appendix 26, in particular projecting laterally to the same package 100.

In this manner, it is possible to obtain a package that can be easily taken and treated by corresponding infusion machines.

With advantage, as can be seen from said Figs. 4A to 4E, said first and/or said second valves 161, 162, in particular both of them, of said outer shell 016 for housing said tablet, or wrapped edible product, 10', have a respective projecting appendix 261, 262, in particular projecting laterally to said package 100, in particular defining, or defining together, said projecting appendix 26 of the package 100.

As can be seen from said Figs. 4A to 4E, in a particularly advantageous manner, the peripheral outer lip 164, 164 of the respective first and/or second valves 161, 162, in particular both of them, of said outer shell 016 for housing said tablet, or wrapped edible product, 10', are configured asymmetric to define said projecting appendix 261, 262, in particular projecting laterally to said package 100.

Advantageously, as can be seen from said Figs. 4A to 4E, in particular to define said projecting appendix 26 of the package 100, said first and/or said second valves, in particular the respective peripheral outer lip 164, 164 of the corresponding valve 161, 162, have a respective projecting appendix 261, 262, which is defined by corresponding first and second linear, or substantially linear edges, 267, 267, converging in the radial direction to the same package 100, or respective valve 161, 162 of said outer shell 16.

With advantage, as can be seen from said Figs. 4A to 4E, said linear, or substantially linear edges, 267, 267, converging in the radial direction to the same package 100, or to the respective valve 161, 162 of said outer shell 16, extend from the opposite ends of a corresponding semi-circular edge 268 of the same first and/or second valve 161, 162 of said outer shell 016 of the package 010, i.e., of the respective peripheral outer lip 164, 164 of the same valve 161, 162 of the outer shell 016 of the package 010.

As can be seen from said Figs. 4A to 4E, in an advantageous manner, said linear, or substantially linear edges, 267, 267, converging in the radial direction of the respective first and/or second valves 161, 162, of said outer shell 16, have the respective free end that is joined by a corresponding outermost curved edge 269.

Advantageously, as can be seen from said Figs. 4A to 4E, said first and second valves 161, 162 of said outer shell 016 are connected, in particular welded, i.e., thermally welded to one another, at the opposite faces 160, 160 of mutual engagement of the corresponding peripheral outer lips 164, 164, in particular the entire opposite faces 160, 160 of said outer peripheral lips 164, 164 are mutually connected to one another.

With advantage, as can be seen from said Figs. 4A to 4E, said first and second valves 161, 162 of said outer shell 016 are symmetrically configured one with respect to the other, in particular being symmetrical, when assembled, with respect to a corresponding horizontal plane.

In a particularly advantageous manner, as already set forth herein above, said tablet, or wrapped edible product, 10' is obtained by providing energy to said particles of edible material, in particular wrapped in a corresponding outer casing, or layer, 14 of the same tablet, or wrapped edible product.

In an advantageous manner, as already set forth herein above, the energy that is provided to said particles of edible material, in particular wrapped in a corresponding outer casing, or layer, 14 of the same tablet, or wrapped edible product, is in the form of vibrational energy, in particular ultrasound energy, preferably conferred through a corresponding sonotrode device, not illustrated in particular in the attached figures.

With advantage, as already set forth herein above, mechanical vibrational energy at a frequency ranging between 16000 and 35000 Hertz is provided to said particles of edible material, in particular wrapped in a corresponding outer casing, or layer, 14 of the same tablet, or wrapped edible product.

Advantageously, as already set forth herein above, energy in an amount ranging between 500 and 6000 Joules, preferably in a range between 1100 and 3000 Joules is provided to said particles of edible material, in particular wrapped in a corresponding outer casing, or layer, 14 of the same tablet, or wrapped edible product.

In a particularly advantageous manner, as already set forth herein above, the weight of the particles of edible material of the package is a weight ranging between 5 g and 25 g.

As can be seen from the following figures 5 and 6, with advantage, the respective valve 161, i.e., similarly, the valve 162, for carrying out a corresponding outer shell 016 of the package 100, is made of a corresponding small sheet of film, for defining the same outer shell 016 for housing said tablet, or wrapped edible product, 10', so that corresponding valves 161, or similarly corresponding valves 162, have said respective linear, or substantially linear edges, 267, 267, which are converging in the radial direction to the same package 100, or to the respective valve 161, 162 of the same outer shell 16, that are at least partially, i.e., completely defined, by a corresponding linear cut 367, 467 of mutual separation between adjacent valves.

In this manner a considerable saving of material is obtained to make the outer shell of the package.

As can be seen from Fig. 5, in an advantageous manner, according to a first embodiment form of small sheet, said linear cuts 367 of mutual separation between respective valves 161, i.e., similarly between respective valves 162, for carrying out a corresponding outer shell 016 of the package 100, i.e., defining corresponding linear, or substantially linear edges, 267, 267, converging in the radial direction to the same package 100, or to the respective valves 161, 162 of said outer shell 16, are radially converging to one another, in particular towards a common, central point with respect to the same valves.

With advantage, as can be seen from Fig. 6, in accordance with a second embodiment form of the small sheet, said linear cuts 467 of mutual separation between respective valves 161, i.e., similarly, the valve 162, for carrying out a corresponding outer shell 016 of the package 100, i.e., defining corresponding linear, or substantially linear edges, 267, 267, converging in the radial direction to the same package 100, or to the respective valve 161, 162 of said outer shell 16, are longitudinally aligned with respect to one another and alternately inclined according to respective and opposite angles with respect to the corresponding transversal direction.

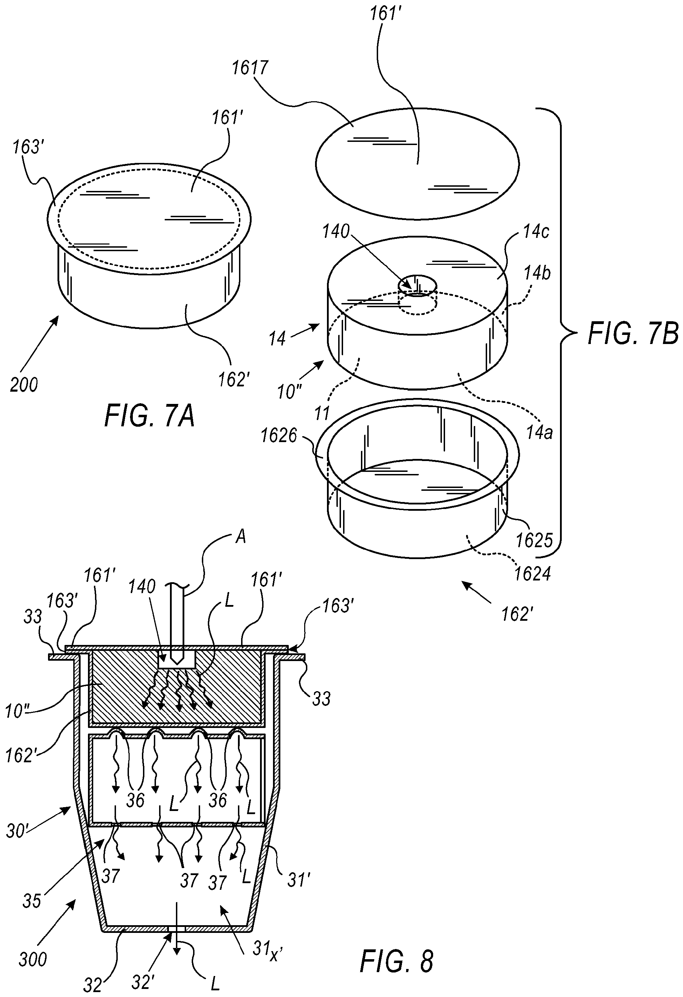

Advantageously, as can be seen from the following figures 7A and 7B, in accordance with a third preferred embodiment of package 200, the same package 200 has an outer shell that comprises a cup-shaped valve 162', which entirely houses said tablet, or wrapped edible product, marked with the numerical reference 10" in said figures 7A and 7B, and a planar valve 161', which superiorly closes said cup-shaped valve 162'.

In this manner, an advantageous package of an easy use, or retention, within the corresponding infusion machines, in particular already made and already sold on the market, can be obtained.

Advantageously, as can be seen from said Figs. 7A and 7B, the package 200 has an upper transversal peripheral lip 163' peripherally projecting to the outside of the package 200, that in particular allows an easy use, or retention, of the package within corresponding infusion machines, in particular already made and already sold on the market.

Advantageously, as can be seen from said Figs. 7A and 7B, said cup-shaped valve 162' of the package 200 has a bottom transversal wall, preferably planar and circular, 1624, from which peripheral edge a corresponding, preferably cylindrical, side wall, 1625 extends, in particular perpendicularly, from which other longitudinal end, opposite the end of said bottom transversal wall 1624, a circumferential lip 1626 extends peripherally to the outside, defining means for attaching an outer peripheral portion 1617 of said planar valve 161' for an upper closure and defining therewith said upper transversal peripheral lip 163' of the package 200.

Apart from the different configuration of its parts or valves, the shell of this third preferred embodiment of package is made of the same material as the previous embodiments of packages, i.e., is made of biodegradable and/or of organic, in particular plant, origin film, i.e., of the compostable type, of the type that is a barrier to the external environment, in particular to oxygen contained in the external environment, for example of Ecolarene^{®}, i.e., a film made from a laminate of an outer high-barrier film based on biodegradable compostable cellulose and an internal film based on biopolymer of biodegradable and compostable vegetable origin.

Advantageously, as can be seen from said Figs. 7A and 7B, in this third preferred embodiment of package 200 also, said tablet, or wrapped edible product, 10" is obtained as expected according to the embodiment described above, i.e., it comprises an edible product 11, preferably in the form of an infusion product, to obtain a respective beverage, and in particular comprising a material in the form of powder, granules or pieces, such as coffee, tea, chamomile, herbal tea, milk, chocolate, medicinal herbs, or other, in the form of an aggregated, compact material that is entirely wrapped by a casing, in particular made of a single small sheet of material, 14, defining a lower face 14a, a side face 14b, and an upper face 14c, in particular of a biodegradable or compostable material, preferably of PLA, as already illustrated herein above, and, however, it has, differently from the previous embodiments, a cavity, in particular a central cavity, 140, which is recessed, in the body of the same tablet, or wrapped edible product, 10", starting from said upper outer face 14a of said tablet, or wrapped edible product, 10".

In this manner, it is possible to define an indentation for a corresponding needle A, of the infusion machine, which allows the feeding of a corresponding infusion liquid L, into said tablet, or wrapped edible product, 10", in particular after perforating the outer upper valve 161' of the package, however, as it will be clearer from the following in the present description.

Advantageously, as can be seen from said Figs. 7A and 7B, also in this third preferred embodiment of package 200, said central cavity 140 of said tablet, or wrapped edible product, 10" has a respective transversal extension, in particular that is defined by a corresponding inner surface, in particular cylindrical, of said tablet, or wrapped edible product, 10", of a corresponding depth or height, in particular an axial or longitudinal direction, especially so as to allow the needle A, or a similar means, for feeding the infusion liquid L of the respective infusion machine, to be positioned inside the same cavity 140 and not to be inserted in direct contact with the edible material 11 of the same tablet, or wrapped edible product, 10".

In this manner, the exit of said liquid from said feeding needle A and its diffusion into the edible material 11 of the same tablet, or wrapped edible product, 10" is facilitated, and thus it is possible to obtain a valuable infused beverage.

A preferred embodiment of an adapter 300 is also provided, which adapter, advantageously, as is clear from said Fig. 8, is adapted to support a package, in particular a package 200 as illustrated above, and that it is adapted to be inserted in a corresponding infusion machine, to obtain a corresponding beverage, for example coffee, tea, chamomile, herbal tea, milk, chocolate, infusion of medicinal herbs or analogues, and others.

In an advantageous manner, as is clear from said Fig. 8, said adapter 300 is in the form of a hollow body 30' that is shaped so as to be able to be housed in the infusion zone of a corresponding infusion machine, in particular also of a prefabricated type.

In a further advantageous manner, as can be seen from Fig. 8, the adapter 300 has a side peripheral wall 31', for example a cylindrical, conical, or partially conical and partially cylindrical, as illustrated, or anyhow shaped side peripheral wall 31', which defines an inner space 31x' for housing the respective package 200 and that is open at the opposite ends to allow the inflow and outflow of the infusion liquid L.

Advantageously, as can be seen from Fig. 8, said hollow body 30' has a bottom transversal wall 32 having at least one opening 32' for the exit of the infusion liquid L with the infused product.

As can be seen from Fig. 8, in a particularly advantageous manner, said hollow body 30' is superiorly open, i.e., is open at the respective longitudinal end that is opposite the end of said transversal or bottom wall 32, and has a respective projecting peripheral edge, or lip 33, preferably, as illustrated, for resting and holding, in use, said upper transversal peripheral lip 163' of the package 200.

As is clear from said Fig. 8, advantageously, a member 35 for a lower perforation of the package 200 is provided, which is arranged, preferably in a removable manner, inside the inner chamber of the adapter 31x' for housing said package 200, and, in particular, which is positioned in said housing chamber 31x' by virtue of the engagement of at least one corresponding face, or portion, against at least one corresponding inner face of the corresponding wall 31' of said hollow body 30' of the adapter 300.

Advantageously, as is clear from said Fig. 8, said member 35 for a lower perforation of the package 200 has an upper face, or wall, from which corresponding needles, or cuspids, 36 extend longitudinally or superiorly for perforating the package 200, in particular the lower valve 162' thereof, preferably said needles, or cuspids, 36 being axially hollow to allow the passage of the infusion liquid L, with the infused product. In particular, as illustrated, the member 35 therefore has a lower face, or wall, that is provided with respective holes 37 for an easy conveyance of the same liquid L, with the infused product towards the exit of the adapter.

According to a further embodiment form, not illustrated in particular in the attached figures, said outer shell, in particular as the one of the second preferred embodiment 016, is obtained as to be of a breakable type, i.e., said first and second valves of the package, in particular come as those of said second preferred embodiment 261, 262, are connected to one another in a mutually separable manner, i.e., with a peelable coupling, so as to allow the opening of the package and the removal of the tablet, or wrapped edible product, 10', which can thus be used directly and individually, without the outer shell 016, in a respective infusion machine, for example by being inserted within the corresponding housing seat of the same infusion machine, where the tablet or wrapped edible product, 10', is then subjected to an infusion, by a corresponding fluid or liquid, and it is thus possible to obtain a respective and advantageous beverage.

In practice, as it is clear, the technical features illustrated above allow, individually or in a respective combination, to achieve one or more of the following advantageous results:
- it is possible to create in a simplified and particularly easy manner a entirely compostable package and in which the outer film effectively contains the material housed internally and which can be advantageously used also directly in corresponding infusion machines;
- it is possible to use a single small sheet of special film to wrap the edible, or infusion, material;
- with a few, easy operations, a casing suitable for the purpose is obtained;
- a particularly rapid process is obtained, which is such as to require the use of a limited space for its embodiment;
- it is avoided to use any further device, for example, corresponding mechanical folding means, to obtain the present product;
- by virtue of the outer shell of the package made of barrier material that is of a biodegradable type and/or of biological, in particular plant, origin, i.e., of the compostable type, it is possible to easily use the package in the corresponding infusion device and then throw it entirely in the biodegradable or compostable material waste container, all without requiring an external package made of a special barrier material to preserve the contained edible material to be disposed of in the unsorted waste container, as was the case according to the previous known packages.
- moreover, in particular, with the tablet, or wrapped edible product, which comprises the outer casing in filtering material, the same tablet, or wrapped edible product, is more compact, and little prone, during the infusion, to split, i.e., to allow the formation therein of corresponding channels of preferential passage for the infusion fluid that would not allow to make a good and homogeneous infusion of the material of the same tablet, or wrapped edible product, allowing in this manner to obtain an infused product of excellent quality;
- a package is obtained, which is particularly compact and suitable to allow an optimal withdrawal passage of edible material by the infusion liquid;
- a package is obtained, which is obtainable in an easy and quick manner, and without generating an excessive level of fouling in the equipment intended for the embodiment thereof;
- it is possible to obtain a package that can be easily taken and treated within the corresponding infusion machines;
- a considerable saving of material is obtained to make the outer shell of the package;
- an adapter is obtained, which allows the present packages to be used easily even on already existing infusion machines.

The present invention is susceptible of clear industrial application. The person skilled in the art will also be able to devise a number of modifications and/or variations to be made to the same invention, while remaining within the scope of the inventive concept, as set out in the claims. Furthermore, the person skilled in the art will be able to devise further preferred embodiments of the invention, which include one or more of the above illustrated features of the preferred embodiment.

## Claims

1. A process for making an edible product, the edible product comprising a material in the form of powder, granules or pieces, such as coffee, tea, chamomile, herbal tea, milk, chocolate, medicinal herbs, or other; in the process, it is used a casing (14), made of biodegradable and/or of organic origin film, i.e., of the compostable type, said casing being obtained from a respective small sheet (14') and being introduced in a respective mould (20) having a chamber (21) for housing the product and the respective casing or small sheet (14'), in a folded condition, which chamber (21) is defined by a bottom surface (21a) and by a side surface (21b), said mould (21) being open on the side opposite the bottom side (21a), so that said folded casing or small sheet (14') has a bottom wall and a side wall (14l) and with said predefined portion of edible material (11) that is introduced in said folded casing or small sheet (14') housed within said mould; according to the process it is provided a predefined portion (11) of said material within said casing (14), and it is provided energy to said casing (14) with the contained material (11), until intimately connecting, or adhering, said casing (14) to said material (11) on the lower surface (11a), and side surface (11b) of said material, said energy that is supplied to said casing (14) with the contained material (11) is in the form of vibrational energy; **characterized in that** the casing within the mould is in an open cup-shaped configuration; **in that** said folded small sheet or casing within said housing chamber (21) of the mould (20) has the respective side wall (14l) with respective, in particular upper, ends, which remain completely within the same chamber (21) of the mould (20), which side wall (14l) is arranged parallel, or substantially parallel, to the corresponding side wall (21b) of the housing chamber (21) of the mould (20); and **in that** said predetermined portion of edible material (11) is introduced into said housing chamber (21) of the mould (20) and into the small sheet or casing, (14'), in a folded condition, with said side wall (14l) of the small sheet or casing projecting superiorly beyond the upper surface (11c) of the same edible material; and **in that** said energy provided to said casing (14) with the contained material (11) is such to intimately connect, or adhere, said side wall (14l), of the small sheet or casing projecting superiorly beyond the upper surface (11c) of the same edible material, to said material (11) on the entire, or substantially entire, upper surface (11c) of the same material.

2. The process according to claim 1, **characterized in that** power is supplied to said casing (14') with the contained material (11) within said forming mould (20).

3. The process according to any of the preceding claims, **characterized in that** said casing (14) is obtained from a respective planar small sheet (14') that is suitably shaped to make so that the entire side wall (14l) of the folded casing or small sheet remains completely within the same chamber (21) of the mould (20) of the same mould, in particular said small sheet is of a quadrangular shape with corresponding blunted edges (14").

4. The process according to any of the preceding claims, **characterized in that** said casing (14), in a condition that is wrapped on the portion (11) of edible or infusion material, has a bottom wall (14a), in particular in contact with and adhering to the lower surface of said material, a side wall (14b) in contact with the side surface of the same material, and an upper wall (14c), in particular in contact, or substantially in contact, with the entire upper surface of the product, especially, which upper wall is defined by a corresponding plurality of portions or flaps (14d) of the casing that are in a folded, or crumpled, condition, on the upper surface (11c) of said portion (11) of edible, or infusion, material, and preferably in an at least partially overlapping condition one upon the other.

5. The process according to any of the preceding claims, **characterized in that**, in order to introduce the small sheet into the housing chamber (21) of the mould (20), corresponding drawing means (30) are used, in particular which drawing means (30) are mobile between a lifted position for the positioning of the small sheet (14') superiorly to the opening (21c) for the introduction into said housing chamber (21) of the mould (20) and a lowered position for the insertion of said small sheet, in a folded condition (14'), into the same housing chamber (21) of the mould (20).

6. The process according to preceding claim 5, **characterized in that** said drawing means (30) which are suitable to define dosing means of said predetermined portion (11) of product into said casing or small sheet (14') housed in the housing chamber (21) of the mould (20).

7. The process according to claim 6, **characterized in that** the a drawing body (301) of the drawing means (30) is internally hollow, and it houses means (31) for dosing the predefined portion of product, in particular in the form of a respective screw (311) to feed the edible, or infusion, material, towards a respective outlet mouth at the engaging end of the small sheet of said drawing body (301), i.e., of the shaped, or conical, outermost portion, of the same drawing body (20).

8. The process according to any of the preceding claims 6 and 7, **characterized in that** predetermined portion of product (11) is dosed, while said drawing and/or dosing means (30) are in the lowered position for the insertion of said small sheet, in a folded condition (14'), into the same housing chamber (21) of the mould (20).

9. The process according to any of the preceding claims, **characterized in that** the small sheet (14') for the definition of the casing (14) is cut, by corresponding cutting means, from a corresponding web of material (14‴).

10. The process according to any of the preceding claims, **characterized in that** said predefined portion (11) of said material is provided for within said open casing (14) directly into the casing folded within the housing chamber (21) of the mould (21).

11. The process according to any of the preceding claims, **characterized in that** by means of said energy supply to said casing (14), with the contained material (11), a rigid and compact tablet of said material (11) is obtained.

12. The process according to any of the preceding claims, **characterized in that** the energy that is supplied to said casing (14) with the contained material (11) is in the form of ultrasound energy, imparted through a corresponding sonotrode (34) engaging the mould (20) for housing the casing and material; and/or **in that** mechanical vibrational energy at a frequency ranging between 16000 and 35000 Hertz is supplied to the casing (14) with the contained material (11); and/or **in that** energy is supplied to the casing with the contained material in a range between 500 and 6000 Joules, preferably in a range between 1100 and 3000 Joules; and/or **in that** energy is supplied to the casing with the contained material during a time period ranging between 0.5 and 20 seconds, and preferably ranging between 2 and 6 seconds.

13. The process according to any of the preceding claims, **characterized in that** the portion of infusion material that is treated and inserted into a specific casing (14) has a weight ranging between 5 and 25 g.

14. The process according to any of the preceding claims, **characterized in that** said product is in the form of small pieces of small tea leaves and/or chamomile flower and/or herbal tea and/or medicinal herbs, or powder or granules of roast and ground coffee or other.

15. The process according to any of the preceding claims, **characterized in that** said casing (14) is made of PLA.

## Patentansprüche

1. Verfahren zur Herstellung eines essbaren Produkts, wobei das essbare Produkt ein Material in Form von Pulver, Granulat oder Stücken umfasst, wie etwa Kaffee, Tee, Kamille, Kräutertee, Milch, Schokolade, Heilkräuter oder dergleichen; in dem Verfahren wird eine Hülle (14) aus biologisch abbaubarer Folie und/oder organischen Ursprungs, also kompostierbarer Art, verwendet, die aus einem jeweiligen kleinen Blatt (14') gewonnen und in eine entsprechende Form (20) eingebracht wird, umfassend eine Kammer (21) zur Aufnahme des Produkts und der jeweiligen Hülle oder des jeweiligen kleinen Blatts (14') in gefaltetem Zustand, wobei die Kammer (21) durch eine Bodenfläche (21a) und eine Seitenfläche 821b) begrenzt wird, wobei die Form (21) auf der der Bodenseite (21a) gegenüberliegenden Seite offen ist, so dass die gefaltete Hülle oder das kleine Blatt (14') eine Bodenwand und eine Seitenwand (14I) aufweist, und mit dieser vordefinierten Portion von essbarem Material (11), die in die gefaltete Hülle oder in das in der Form untergebrachte kleine Blatt (14') eingebracht wird; gemäß dem Verfahren wird ein vordefinierter Anteil (11) des Materials in die Hülle (14) eingebracht und der Hülle (14) mit dem enthaltenen Material (11) Energie zugeführt wird, bis diese die Hülle (14) mit dem Material (11) auf der unteren Oberfläche (11a) und auf der Seitenoberfläche (11b) des Materials innig verbindet oder anhaftet, wobei die Energie, die der Hülle (14) mit dem darin enthaltenen Material (11) zugeführt wird, in der Form von Vibrationsenergie vorliegt, **dadurch gekennzeichnet, dass** die Hülle innerhalb der Form eine offene becherförmige Konfiguration aufweist, so dass das kleine gefaltete Blatt oder die Hülle innerhalb der Aufnahmekammer (21) der Form (20) die jeweilige Seitenwand (141) mit jeweiligen, insbesondere oberen Enden, aufweist, die vollständig innerhalb derselben Kammer (21) der Form (20) verbleiben, wobei die Seitenwand (14I) parallel oder im Wesentlichen parallel zur entsprechenden Seitenwand (21b) der Aufnahmekammer (21) der Form angeordnet ist, und dadurch, dass der vorgegebene Anteil an essbarem Material (11) in die Aufnahmekammer (21) der Form (20) und in das kleine Blatt oder die Hülle (14) in einem gefalteten Zustand eingeführt wird, wobei die Seitenwand (14I) des kleinen Blatts oder der Hülle von der oberen Oberfläche (11c) desselben essbaren Materials nach oben vorsteht und dass die Energie, die der Hülle (14) mit dem enthaltenen Material (11) geliefert wird, so beschaffen ist, dass sie die Seitenwand (14I) des kleinen Blatts oder der Hülle, die über die Oberseite (11c) desselben essbaren Materials hinausragt, zu diesem Material (11) über die gesamte, oder im Wesentlichen über die gesamte obere Fläche (11c) aus demselben Material, verbindet oder an dieser haftet.

2. Verfahren nach Anspruch 1, **dadurch gekennzeichnet, dass** der Hülle (14) mit dem enthaltenen Material (11) innerhalb der Form (20) Energie zugeführt wird.

3. Verfahren nach einem der vorhergehenden Ansprüche, **dadurch gekennzeichnet, dass** die Hülle (14) aus einem jeweiligen kleinen flachen Blatt (14') gewonnen wird, das entsprechend geformt ist, so dass die gesamte Seitenwand (14I) der gefalteten Hülle oder des kleinen Blattes vollständig innerhalb derselben Kammer (21) der Form (20) derselben Form verbleibt, wobei insbesondere das kleine Blatt eine viereckige Form mit entsprechenden stumpfen Kanten (14") aufweist.

4. Verfahren nach einem der vorhergehenden Ansprüche, **dadurch gekennzeichnet, dass** die Hülle (14) in einem um den Anteil (11) aus Ess- oder Infusionsmaterial gewickelten Zustand eine Bodenwand (14a) aufweist, die insbesondere an der unteren Fläche, an einer Seitenwand (14b) in Kontakt mit der Seitenfläche aus demselben Material und mit einer oberen Wand (14c), insbesondere in Kontakt oder im Wesentlichen in Kontakt mit der gesamten oberen Fläche des Produkts, anliegt oder an diese haftet, insbesondere wobei die obere Wand durch eine entsprechende Vielzahl von Teilen oder Klappen (14d) der Hülle definiert ist, die sich in einem gefalteten oder zerknitterten Zustand auf der oberen Fläche (11c) des Anteils (11) aus Ess-oder Infusionsmaterial, und vorzugsweise in einem zumindest teilweise übereinander liegenden Zustand, befinden.

5. Verfahren nach einem der vorhergehenden Ansprüche, **dadurch gekennzeichnet, dass** zum Einbringen des kleinen Blattes in die Aufnahmekammer (21) der Form (20), entsprechende Streckmittel (30) verwendet werden, wobei insbesondere sind die Streckmittel (30) zwischen einer angehobenen Position zum Positionieren des kleinen Blattes (14') über der Öffnung (21c) zur Einführung in die Aufnahmekammer (21) der Form (20), und einer abgesenkten Position zum Einführen des kleinen Blattes in einem gefaltetem Zustand, in die gleiche Aufnahmekammer (21) der Form (20), bewegbar sind.

6. Verfahren nach dem vorhergehenden Anspruch 5, **dadurch gekennzeichnet, dass** die Streckmittel (30), die geeignet sind, Mittel zum Dosieren des vorgegebenen Anteils (11) von Produkt in die in der Aufnahmekammer (21) untergebrachte Hülle der Form (20) oder in das kleine Blatt (14'), zu definieren.

7. Verfahren nach Anspruch 6, **dadurch gekennzeichnet, dass** ein Streckkörper (301) der Streckmittel (30) im Inneren hohl ist und Mittel (31) zum Dosieren des vorgegebenen Anteils von Produkt, insbesondere in Form einer entsprechenden Schraube (311) umfasst, zum Zuführen des Ess- oder Infusionsmaterials zu einem jeweiligen Auslassöffnung am Eingriffsende des kleinen Blatts des Streckkörpers (301), d. h. des geformten oder äußersten Anteils desselben Streckkörpers (20).

8. Verfahren nach einem der vorhergehenden Ansprüche 6 und 7, **dadurch gekennzeichnet, dass** ein vorbestimmter Anteil (11) von Produkt dosiert wird, während sich die Streck- und/oder Dosierungsmittel (30) in der abgesenkten Position zum Einführen des kleinen Blattes in einem gefalteten Zustand (14'), in der gleichen Aufnahmekammer (21) der Form (20), befinden.

9. Verfahren nach einem der vorhergehenden Ansprüche, **dadurch gekennzeichnet, dass** das kleine Blatt (14') zum Definieren der Hülle (14) mit entsprechenden Schneidmitteln aus einem entsprechenden Materialstreifen (14"') geschnitten wird.

10. Verfahren nach einem der vorhergehenden Ansprüche, **dadurch gekennzeichnet, dass** der vordefinierte Anteil (11) des Materials innerhalb der offenen Hülle (14) direkt innerhalb des gefalteten Hülle innerhalb der Aufnahmekammer (21) der Form (21) bereitgestellt wird.

11. Verfahren nach einem der vorhergehenden Ansprüche, **dadurch gekennzeichnet, dass** durch die Energiezufuhr zur Hülle (14) mit dem enthaltenen Material (11) eine starre und kompakte Tablette des Materials (11) erhalten wird.

12. Verfahren nach einem der vorhergehenden Ansprüche, **dadurch gekennzeichnet, dass** die Energie, die der Hülle (14) mit dem enthaltenen Material (11) zugeführt wird, in Form von Ultraschallenergie vorliegt, die durch eine entsprechende Sonotrode (34) in Eingriff mit der Form (20) zur Aufnahme von Hülle und Material vermittelt wird, und/oder dass die mechanische Vibrationsenergie mit einer Frequenz zwischen 16.000 und 35.000 Hertz der Hülle (14) mit dem enthaltenen Material zugeführt wird, und/oder dass Energie der Hülle mit dem enthaltenen material in einem Bereich zwischen 500 und 6000 Joule, vorzugsweise in einem Bereich zwischen 1100 und 3000 Joule, zugeführt wird, und/oder dass Energie der Hülle mit dem enthaltenen Material für einen Zeitraum zwischen 0,5 und 20 Sekunden, vorzugsweise zwischen 2 und 6 Sekunden, zugeführt wird.

13. Verfahren nach einem der vorhergehenden Ansprüche, **dadurch gekennzeichnet, dass** der behandelte und in eine bestimmte Hülle (14) eingebrachte Anteil des Infusionsmaterials ein Gewicht zwischen 5 und 25 g aufweist.

14. Verfahren nach einem der vorhergehenden Ansprüche, **dadurch gekennzeichnet, dass** das Produkt aus kleinen Stücken kleiner Teeblätter und/oder Kamillenblüten und/oder Kräutertee und/oder Heilkräutern oder Pulver oder Granulat aus Braten, gemahlener Kaffee oder anderes, besteht.

15. Verfahren nach einem der vorhergehenden Ansprüche, **dadurch gekennzeichnet, dass** die Hülle (14) aus PLA besteht.

## Revendications

1. Procédé de fabrication d'un produit comestible, le produit comestible comprenant un matériau sous forme de poudre, de granulés ou de morceaux, tel que du café, du thé, de la camomille, tisane, lait, chocolat, herbes médicinales ou autres; dans le procédé une enveloppe (14) est utilisée, en film biodégradable et/ou d'origine organique, c'est-à-dire du type compostable, ladite enveloppe étant obtenue à partir d'une petite feuille respective (14') et étant introduite dans un moule respectif (20) comportant une chambre (21) pour loger le produit et l'enveloppe ou la petite feuille respective (14'), dans un état plié, la chambre (21) étant définie par une surface de fond (21a) et par une surface latérale (21b), ledit moule (21) étant ouvert du côté opposé au côté de fond (21a), de sorte que ladite enveloppe pliée ou la petite feuille (14') présente une paroi de fond et une paroi latérale (141) et avec ladite partie prédéfinie de matériau comestible (11) qui est introduite dans ladite enveloppe pliée ou dans la petite feuille (14') logée à l'intérieur dudit moule; selon le procédé une partie prédéfinie (11) dudit matériau est fournie à l'intérieur de ladite enveloppe (14), et de l'énergie est fournie à ladite enveloppe (14) avec le matériau contenu (11) jusqu'à ce qu'il relie intimement, ou adhère, ladite enveloppe (14) audit matériau (11) sur la surface inférieure (11a) et sur la surface latérale (11b) dudit matériau, ladite énergie qui est fournie à ladite enveloppe (14) avec le matériau contenu (11) étant en forme d'énergie de vibration, **caractérisé en ce que** l'enveloppe à l'intérieur du moule a une configuration en forme de coupe ouverte, **en ce que** ladite petite feuille pliée ou l'enveloppe à l'intérieur de ladite chambre de logement (21) du moule (20) présentent la respective paroi latérale (141) avec des respectives extrémités, notamment supérieures, qui restent complètement à l'intérieur de la même chambre (21) du moule (20), la paroi latérale (141) étant agencée parallèle, ou sensiblement parallèle, à la paroi latérale correspondante (21b) de la chambre de logement (21) du moule (20), et **en ce que** la dite partie prédéterminée de matériau comestible (11) est introduite dans ladite chambre de logement (21) du moule (20) et à l'intérieur de la petite feuille ou enveloppe (14), dans un état plié, avec ladite paroi latérale (141) de la petite feuille ou enveloppe faisant saillie supérieurement de la surface supérieure (11c) du même matériau comestible, et **en ce que** ladite énergie fournie par ladite enveloppe (14) avec le matériau contenu (11) est de telle sorte qu'elle est intimement relié, ou adhère, à ladite paroi latérale (141) de la petite feuille ou enveloppe faisant saillie supérieurement de la surface supérieure (11c) du même matériau comestible, audit matériau (11) sur la totalité, ou sensiblement sur la totalité, de la surface supérieure (11c) du même matériau.

2. Procédé selon la revendication 1, **caractérisé en ce que** de l'énergie est fournie à ladite enveloppe (14) avec le matériau contenu (11) à l'intérieur dudit moule de formage (20).

3. Procédé selon l'une quelconque des revendications précédentes, **caractérisé en ce que** ladite enveloppe (14) est obtenue à partir d'une petite feuille plane respective (14') qui est conformée de manière appropriée pour que la totalité de la paroi latérale (141) de l'enveloppe pliée ou de la petite feuille reste complètement dans la même chambre (21) du moule (20) du même moule (20), notamment ladite petite feuille est de forme quadrangulaire avec des bords émoussés correspondants (14").

4. Procédé selon l'une quelconque des revendications précédentes, **caractérisé en ce que** ladite enveloppe (14), dans un état enveloppé sur la partie (11) de matériau comestible ou d'infusion, présente une paroi de fond (14a), notamment en contact avec et adhérant à la surface inférieure dudit matériau, une paroi latérale (14b) en contact avec la surface latérale du même matériau, et une paroi supérieure (14c), notamment en contact, ou sensiblement en contact, avec toute la surface supérieure du produit, en particulier, la paroi supérieure étant définie par une pluralité correspondante de parties ou rabats (14d) de l'enveloppe qui sont dans un état plié ou froissé, sur la surface supérieure (11c) de ladite partie (11) de matériau comestible ou d'infusion, et de préférence dans un état au moins partiellement superposé les uns sur les autres.

5. Procédé selon l'une quelconque des revendications précédentes, **caractérisé en ce que** pour introduire la petite feuille dans la chambre de logement (21) du moule (20), on utilise des moyens d'étirage (30) correspondants, en particulier les moyens d'étirage (30) étant mobiles entre une position relevée pour le positionnement de la petite feuille (14') au-dessus de l'ouverture (21c) pour l'introduction dans ladite chambre de logement (21) du moule (20) et une position abaissée pour l'insertion de ladite petite feuille, dans un état plié (14'), dans la même chambre de logement (21) du moule (20).

6. Procédé selon la revendication 5 précédente, **caractérisé en ce que** lesdits moyens d'étirage (30), qui sont adaptés pour définir des moyens de dosage de ladite partie prédéterminée (11) de produit dans ladite enveloppe ou petite feuille (14') sont logés dans la chambre de logement (21) du moule (20).

7. Procédé selon la revendication 6, **caractérisé en ce que** un corps d'étirage (301) des moyens d'étirage (30) est creux intérieurement et loge des moyens (31) de dosage de la partie prédéfinie de produit, notamment sous la forme d'une vis respective (311) pour alimenter le matériau comestible, ou d'infusion, vers une bouche de sortie respective à l'extrémité d'engagement de la petite feuille dudit corps d'étirage (301), c'est-à-dire de la partie plus extérieure formée ou conique du même corps d'étirage (20).

8. Procédé selon l'une quelconque des revendications précédentes 6 et 7, **caractérisé en ce qu'**une partie prédéterminée de produit (11) est dosée, tandis que lesdits moyens d'étirage et/ou de dosage (30) sont dans la position abaissée pour l'insertion de ladite petite feuille, dans un état plié (14'), dans la même chambre de logement (21) du moule (20).

9. Procédé selon l'une quelconque des revendications précédentes, **caractérisé en ce que** la petite feuille (14') pour la définition de l'enveloppe (14) est découpée, par des moyens de découpe correspondants, dans une bande de matériau correspondante (14‴).

10. Procédé selon l'une quelconque des revendications précédentes, **caractérisé en ce que** ladite partie prédéfinie (11) dudit matériau est prévue à l'intérieur de ladite enveloppe ouverte (14) directement dans l'enveloppe pliée à l'intérieur de la chambre de logement (21) du moule (21).

11. Procédé selon l'une quelconque des revendications précédentes, **caractérisé en ce que** par ladite alimentation en énergie de ladite enveloppe (14), avec le matériau (11) contenu, un comprimé rigide et compact dudit matériau (11) est obtenu.

12. Procédé selon l'une quelconque des revendications précédentes, **caractérisé en ce que** l'énergie qui est fournie à ladite enveloppe (14) avec le matériau contenu (11) est sous forme d'énergie ultrasonore, transmise à travers une sonotrode correspondante (34) engageant le moule (20) pour loger l'enveloppe et le matériau, et/ou qu'une énergie de vibration mécanique à une fréquence comprise entre 16 000 et 35 000 Hertz est alimentée à l'enveloppe (14) avec le matériau contenu (11), et/ou que l'énergie est fournie à l'enveloppe avec le matériau contenu dans un intervalle compris entre 500 et 6 000 Joules, de préférence dans un intervalle compris entre 1100 et 3000 Joules, et/ou que l'énergie est fournie à l'enveloppe avec le matériau contenu pendant une période de temps comprise entre 0,5 et 20 secondes, et de préférence comprise entre 2 et 6 secondes.

13. Procédé selon l'une quelconque des revendications précédentes, **caractérisé en ce que** la partie de matériau d'infusion traitée et insérée dans une enveloppe spécifique (14) a un poids compris entre 5 et 25 g**.**

14. Procédé selon l'une quelconque des revendications précédentes, **caractérisé en ce que** ledit produit est présent sous forme de petits morceaux de petites feuilles de thé et/ou de fleur de camomille et/ou de tisane et/ou d'herbes médicinales, ou de poudre ou de granulés de torréfaction et de café moulu ou autre.

15. Procédé selon l'une quelconque des revendications précédentes, **caractérisé en ce que** ladite enveloppe (14) est réalisé en PLA.
